# EUROPEAN PATENT APPLICATION

(11) **EP 1 058 422 A1**
(43) Date of publication of application: **06.12.2000**
(21) Application number: 99401329.0
(22) Date of filing: 02.06.1999
(51) Int. Cl.: H04L 12/28

(54) **Methods for bridging a HAVi sub-network and a UPnP sub-network and device for implementing said methods**

(71) Applicant: THOMSON multimedia, 92100 Boulogne Billancourt (FR)
(72) Inventor: Bichot, Guillaume, 92648 Boulogne Cedex (FR); Ramaswamy, Kumar, 92648 Boulogne Cedex (FR); Burklin, Helmut, 92648 Boulogne Cedex (FR); Stahl, Thomas, 92648 Boulogne Cedex (FR)
(74) Representative: Kohrs, Martin

(57) **Abstract**

The invention concerns methods for bridging a HAVi sub-network and a UPnP sub-network.

For making UPnP devices available to the HAVi sub-network, the following steps are implemented:
- discovering UPnP devices and/or services on the UPnP sub-network and corresponding to a selection criterion;
- declaration, by a sub-network bridging device, of each discovered UPnP device as a HAVi DCM and of each discovered UPnP service as a HAVi FCM on the HAVi sub-network.

For making HAVi devices available to the UPnP sub-network, the following steps are implemented:
- discovering HAVi software elements of the HAVi sub-network corresponding to a selection criterion;
- representing, in a sub-network bridging device, each of said discovered elements by a UPnP proxy service identified by a port number attributed by said sub-network bridging device; and
- announcing each said proxy services on the UPnP sub-network.

The invention also concerns a device for implementing the above steps.

## Description

The invention concerns methods to bridge HAVi and UPnP sub-networks, a first method addressing the issue of making UPnP objects available to HAVi objects, a second method addressing the issue of making HAVi objects available to UPnP objects. The invention also concerns a bridge device.

The invention applies among others to home networks.

Several sub-networks based on different physical media (wired and wireless) and applications are expected to coexist in a digital home network. Common examples of wired physical media include the coaxial cable, twisted pair wiring, power line and optical fibers. A digital home network also needs to contend with the technological developments within the computer, consumer electronics, telephony and home automation industries.

There have been two recent initiatives within the industry to address different needs:
1. Home Audio-video interactivity (HAVi)
2. Universal Plug and Play (UPnP)

There is a need for harmonization of the two system approaches in order to ensure coexistence and interoperability of devices within these domains. One of the goals of the invention is to accomplish the bridging of the two technological approaches.

The first initiative, Home Audio-Video Interoperability (HAVi), started within the consumer industry is an attempt to accomplish high speed interconnectivity over an IEEE 1394 serial bus network for transacting audio/visual data. This initiative was specifically intended to address the needs of the consumer electronics devices to enable interactivity (with user involvement in a user-device interaction paradigm) and interoperability (with no user involvement in a device-device interaction paradigm). Further, within HAVi, there is a strong emphasis on enabling streaming applications in addition to control applications. An example of a streaming application would be an application transferring a video stream from a recording device to a decoder or display, while an example of a control application would be an application for programming the behavior of devices. This implies a support for both isochronous and asynchronous transactions.

The other key features of HAVi include:
1. Hot Plug and Play
2. Hardware and Operating System Platform neutrality
3. Support for legacy devices (i.e. devices with no HAVi functionality) and a gradual evolution to support new technologies

The second initiative is Universal Plug and Play (UPnP). While HAVi is intended primarily for a high speed IEEE 1394 network for AudioNideo transactions, UPnP is an initiative that is physical layer agnostic and expects to work on a TCP/IP network. The general notions and paradigms are based on the Internet protocols with additions to support the notions of plug and play.

The following non-exhaustive list of documents describe the above architectures in their current state of development, at the priority date of the present application:
For HAVi:
The HAVi 1.0 beta+ specification, dated October 23, 1998

The UPnP technology comprises a set of protocols based on TCP/IP:
- 'Automatically choosing an IP Address in an Ad-Hoc IPv4 Network' (<draft-ietf-dhc-ipv4-autoconfig-04.txt>)
- 'Simple Service Discovery Protocol 1.0' (^{<}http ://search. ie. org/internet-drafts/draft-cai-ssd p-v1-01.txt>)
- 'Multicast Discovery of DNS (Domain Name Server) Services' (<draft-manning-multicast-dns-01.txt>).
- 'Extended Markup Language' - XML (1.0 W3C recommendation)

More information concerning these two architectures is available on the corresponding websites, ie. www.HAVi.org and www.UPnP.org.

The fundamental goal of the interoperability is to ensure that a uniform control paradigm, i.e. model, is presented so that devices in both the HAVi sub-network and the UPnP sub-network are able to interact with devices and perform control functions over their respective sub-network boundary.

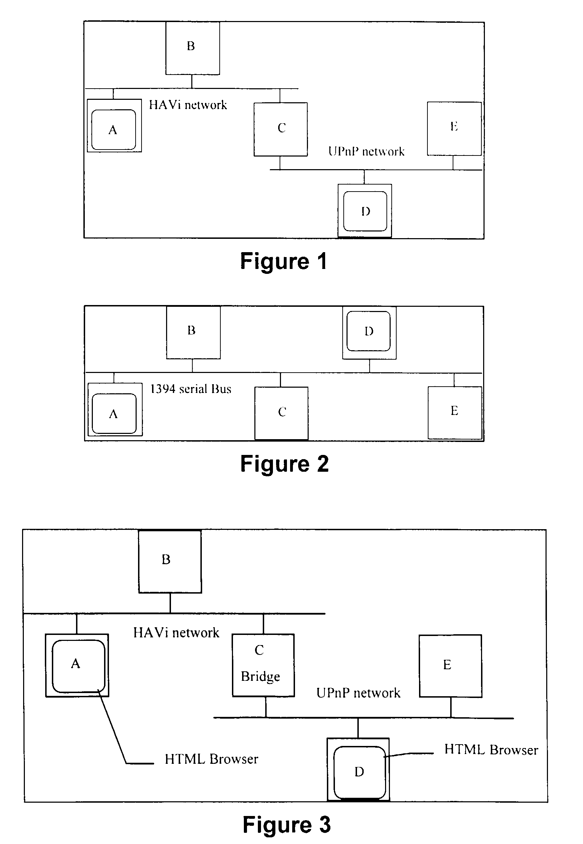

Since HAVi and UPnP based devices are expected to proliferate within the home, it would be necessary to ensure the interoperability of devices within these domains. Figure 1 represents an example of a home network composed of a HAVi based home sub-network and a UPnP based home sub-network that are bridged together. Nodes A and D are displays where the user can view the network topology and can control, through an appropriate user interface, any node on either network. This implies that from node A, the user should for example be able to detect the connection of node E to the UPnP network and should be able to control it. In a similar manner, a user of node D on the UPnP sub-network should be able to detect the appearance of a new HAVi device within the HAVi sub-network and should be able to control it.

In Figure 1, the two sub-networks are built over two different media. However, the problem to be solved is the same in the situation where both network architectures are built over the same media as shown in Figure 2. The nodes A, B and C are HAVi aware and the nodes C, D and E are UPnP aware. In both configurations, there is a node (node C in both examples) which implements the bridge function in order to enable the control of any across the entire network.

The invention aims at providing an interfacing solution in both of the above cases.

The object of the invention is a method for bridging a HAVi sub-network and a UPnP sub-network comprising the steps of:
- discovering UPnP devices and/or services on the UPnP sub-network and corresponding to a selection criterion;
- declaration, by a sub-network bridging device, of each discovered UPnP device as a HAVi DCM and of each discovered UPnP service as a HAVi FCM on the HAVi sub-network.

According to a preferred embodiment, the discovery step is carried out using Simple Service Discovery Protocol (SSDP) functions.

Another object of the invention is a method for bridging a HAVi sub-network and a UPnP sub-network comprising the steps of:
- discovering HAVi software elements of the HAVi sub-network corresponding to a selection criterion;
- representing, in a sub-network bridging device, each of said discovered elements by a UPnP proxy service identified by a port number attributed by said sub-network bridging device; and
- announcing each said proxy services on the UPnP sub-network.

According to a preferred embodiment, the discovery step comprises the step of requesting, by said sub-network bridging device, a list of software elements from a HAVi registry.

According to a preferred embodiment of the inventions above, the selection criterion is HTTP/HTML capability.

Another object of the invention is a device for bridging a UPnP sub-network and a HAVi sub-network implementing the above method steps.

Other characteristics and advantages of the invention will become apparent through the description of a non-limiting, preferred embodiment, described with the help of the attached drawings among which:
- figure 1, already described, represents a HAVi network and a UPnP network linked through a bridge device;
- figure 2, already described, represents a single network comprising both HAVi and UPnP compliant devices;
- figure 3 represents the networks of figure 1 in which each network comprises an HTML browser capable device;
- figure 4 is a schematic diagram of protocol stacks in the bridge device.

In addition to the documents cited in the introduction of the present application, one should also refer to the Hypertext Transfer Protocol ('HTTP') 1.1 for further background information.

Within the context of the UPnP network, it is necessary to detect the entry of a new device into the network, announce its capabilities in a well defined manner and allow the commencement of interaction with other devices within the network. The SSDP protocol and XML operating over the TCP/IP network are used to accomplish this functionality.

For user control, HTML may be used instead of XML.

As described earlier, HAVi is a complete system solution to the interoperability of devices with a IEEE 1394 interface. HAVi addresses, among others, the following issues:
1. Registration of devices/functions
2. Communication media management (the media being an IEEE 1394 serial bus in this case)
3. Modeling devices and functions within devices using device control modules ('DCMs') and function control modules ('FCMs'):
   - the list of services provided by the DCM includes connection management, status queries for the device and its plugs
   - there is a comprehensive list of FCMs representing the most common consumer electronic functional elements
4. Event management (using an event manager)
5. Stream management (using a stream manager)
6. Resource management
7. Support for legacy devices
8. Data Driven Interaction (DDI) mechanism

Some of the services offered within the HAVi paradigm are similar to those envisioned within the UPnP paradigm. The important additions to HAVi include specific provisions for stream management, communication media management and resource management. These additions are quite important in the context of an A/V network based on the IEEE 1394 bus, which imposes severe real time constraints.

One of the issues regarding the interaction between the HAVi and UPnP sub-networks is the need for a common user control protocol. The DDI mechanism, which is standard in HAVI, is not standard within the UPnP network. HTML is standard in an IP based computer network (including UPnP), but is not included in HAVI. In order to solve this problem, the following functionalities are required:
- a user control protocol which can be used across the whole network : HTML
- A bridge function which will allow :
   (a) connection of the two different discovery protocols
   (b) carrying the HTML data over the entire network

The Hypertext Transfer Protocol (or HTTP) is a request/response protocol. This protocol is introduced in the current context since it is the proposed mechanism to accomplish the bridging function alluded to in the preceding sections.

The request/response mechanism dictates a client/server model for devices using HTTP. Two objects are involved in HTTP : the client, which sends a command, and an origin server that receives the command and sends back the response.

The HTTP protocol has a list of well defined methods (or commands) which include the following:
1. Option
2. Get
3. Head
4. Post
5. Put
6. Delete
7. Trace

The most commonly used command is *GET < URL>* where the Uniform Resource Locator (URL) points towards the object to be obtained. This reference is composed of two parts : the first points towards the server equipment and the second points towards the object associated with the command. This target object can be an existing object such as a HTML script or a bit-map or other objects. However the object reference can point towards something that has a meaning for the WEB server but does not represent any real object. This is used, for instance, in an HTML script to signal to the WEB server that the user just selected an icon. After the user selects the icon, the HTML script associates this icon with a URL which will be sent to the WEB server (through the GET command).A URL reference can include some parameters as a command from upper layer protocols.

Basically, a user (application) needs is to be able to detect the network changes (new or removed device/services) and then has to be able to control devices through a User interface (a well known language or protocol).

We first address the user control interface model of both networks. Then, we apply the recommended solution to bridge other control protocols to operate UPnP and HAVi services over the entire network.

Each network technology specifies a way to dynamically discover the appearance or the disappearance of services and devices. The first task of the bridge function is to connect both discovery methods. For that we need:
- a way to represent and to reach a UPnP device/service for a HAVi application within the bridge device;
- a way to represent and to reach a HAVi device/service for a UPnP application within the bridge device.

The UPnP protocol for this function is the Simple Discovery Protocol (called SSDP) alluded to in an earlier section. The HAVi protocol for the corresponding function is the Registry.

Regarding the bridging of the User control interface we need to map the HAVi and the UPnP worlds. HAVi specifies two protocols which are different from HTML. To solve the problem we need:
- a user control protocol which can be used across the whole network : HTML/HTTP;
- a way to implement the HTTP protocol within the HAVi paradigm.

Regarding the bridge of other services (UPnP or HAVi) we need:
- a way, for a HAVi applications to operate the UPnP service/device;
- a way, for a UPnP application to operate the HAVi service/device.

In Figure 3, the bridge function is included in the device C. Any device, irrespective of its functionality, could contain the bridge function. What is needed is that the host device gathers the HAVi middleware and the UPnP protocol stack. For clarity purposes, the C device according to the present embodiment does not provide any functionality other than the bridge as described below.

The next section describes all operations necessary to realize the following scenarios:
- Scenario 1: the network topology is the same as shown in the Figure 3 except that the E device is not present. The User application of A (the HTML browser) after power on, is able to give back to the user the network list of the HTML controlled devices (discovery through the HAVi registry). The E device is plugged on to the UPnP network. The User application detects this new device (through the ANNOUNCE method of SSDP). Then the user will be able to control the E device using HTML.
- Scenario 2: the network topology is the same as shown in the 3 except that the B device is not present. The User application of D (the HTML browser) after power on, is able to give back to the user the network list of the HTML controlled devices (discovery by SSDP queries). The B device is plugged on to the HAVi network. The User application detects this new device (announcement). Then the user will be able to control the B device using HTML.

HTML data is transported using the HTTP protocol. However, HTTP is a means to transport any type of hyper text based content. Just as through HTTP we are able to obtain any User Interface object, such as an icon or a bitmap, we are able to transport XML content as well. Today, the most popular Markup language is HTML. Consequently many product tools already exist. This is the reason we recommend using it within the HAVi network. XML is an emerging standard, and could be used instead of HTML without any modification to our proposal since XML content can be transported over HTTP as well. According to a variant embodiment, XML and HTML are used jointly.

This section proposes to add HTTP (HTML) capabilities to the HAVi specification. This protocol is a simple command/response protocol between a controller and a target (called HTTP server as well). In HAVi, each device is represented by a software component called a DCM (Device Control Module). This DCM contains a certain number of well specified entry points (as a set of functions) which can be used (called) by any other software element of the HAVi network. Like a C function, when a software element calls a function of a DCM (whether remotely or locally, it is transparent for the caller), an associated process is started and the function returns the result of the process. To implement the HTTP paradigm, this invention proposes to add a new function set () within the DCM API to offer the possibility to handle the HTTP protocol between two HAVi software elements - for example between an application (a browser) and a DCM (the HTTP server)-. HAVi uses the IDL (Interface Definition Language) to specify a function. Due the nature of the HTTP protocol, it is possible that HTTP requests or responses contain a very large payload. The transport layer of HAVi specifies a limit on the message size that can be exchanged between two HAVi software elements. However HAVi specifies a way to handle such large messages by a recommended design of the API of the element potentially involved in such communications (see APIs for Bulk transfer).

The following code illustrates the proposed API extension for the DCM which would implement an HTTP server.
enum FileLoc {START, MIDDLE, END};

Permits to indicate whether the message from a producer to a consumer is the first one, a middle one the last one. If the stream to be sent fits into one message, the END value will be used.
Status DCM::HttpOpen(
in short clientBufferSize,
in OperationCode opCode,
out long cid,
out short ServerBufferSize)
clientBufferSize : indicates the maximum size (in bytes) of a message accepted by the requester. The DCM will take into account of that parameter during the sending of the HTTP response to the client.
opCode : this is the operation code the DCM will use to give back to the client the HTTP response. The client function identified by this operation code must be designed according to the prototype named <client>::HttpResponse.
cid : the identifier of this HTTP connection with the DCM. It allows several connections from the same software element client and also permits to match a response with a request.
ServerBufferSize : indicates the maximum size (in bytes) of a message accepted by the DCM. The HTTP client will take into account of that parameter during the sending of the HTTP requests.

This function allows a software element client (or HTTP client) to open a HTTP connection with a DCM.

The error codes for this function are the followings:
DCM::ENUM_CONN: maximum number of opened connections is reached for this DCM
DCM::EALLOC: resource allocation error
Status DCM::HttpClose(in long cid)

The parameter cid is the identifier of this HTTP connection with the DCM. This function is used to close a connection with a Web proxy FCM. The error code is the following:
DCM::ECID: The cid is unknown.
Status DCM::HttpRequest(
in long cid,
in FileLoc where,
in sequence<octet> data)
Parameters
cid: the identifier of the connection between the HTTP client and the DCM (acting as a HTTP server) obtains by the HTTP client from a DCM::HttpOpen call.
where: informs the DCM that this message is the first, the last or a middle one of the request .
data: contains a part or the entire request according to the HTTP protocol.
Description
This function allows a software element client (or HTTP client) to send a request to a DCM acting as a HTTP sever according to HTTP.
Error codes
DCM:ESIZE: the data exceeds the size of the buffer in the receiver. The receiver has not received or processed the data. It is left to the implementation how the sender reacts to this status error.
DCM::EFAILED: the receiver has aborted the transfer of the current sequence of data transfers. The sender shall abort the transfer of the current sequence.
DCM::ECID: The cid is unknown.
Status <Client>::HttpResponse(
in long cid,
in FileLoc where,
in sequence<octet> data)
cid: the identifier of the connection between the HTTP client and the DCM.
where: informs the client that this message is the first, the last or a middle one of the response .
webData: contains a part or the entire response according to the HTTP protocol used through the connection identified by the cid parameter.

This is the prototype of the function to be implemented in the client which allows the DCM (acting as a HTTP server) to give back to the client a HTTP response corresponding to a previously received HTTP request from that client through that connection identified by "cid".

The error codes are the followings:
WebProxy::ESIZE: the data exceeds the size of the buffer in the receiver. The receiver has not received or processed the data. It is left to the implementation how the sender reacts to this status.
WebProxy::EFAILED: the receiver has aborted the transfer of the current sequence of data transfers. The sender shall abort the transfer of the current sequence.
WebProxy::ECID: The cid is unknown.

In HAVi, the designer of a target device can decide which user control protocol (HAVi currently specifies two protocols) to implement. It is not even necessary to provide some user control capabilities as specified in HAVi. For the controller application, it is necessary to know whether a particular target is user-control capable or not. This is the goal of an attribute in the HAVi registry. The Registry is a database where all software elements are registered (including DCM and application module). Any software element can query the database. Each time an element is added or removed, a corresponding network event is generated. An element is registered with a set of attributes to characterize it. One of these attribute is the GUIREQ attribute. The possible values are:
- NO_NEED
- DDI (the basic Ul protocol in HAVi)
- HAVLET (the Java based Ul protocol in HAVi)

The invention proposes to add a new value for this attribute as the following:
- HTTP (the HTTP/HTML paradigm in HAVi)

When a user wants to control a device, its associated client application, typically an HTML browser, exposes the set of network devices HTTP/HTML capable (by querying the Registry on the corresponding GUIREQ attribute value). The user selects one of these and the client application can send the HTTP GET command towards the DCM of the selected target, according to that protocol. To send the HTTP command, the client application first establishes an HTTP connection with the target DCM (calling the DCM::HttpOpen method) and then performs one or several calls (depending on the size of the request and the capabilities of the target DCM in term of the HAVi message size) to the DCM. The DCM then uses DCM: HttpRequest to send its HTTP request. Once the target receives the command, it sends back the Home HTML page associated with the device to the client by calling one or more times the client method called "HttpResponse". The client application (the browser) then interprets the HTML script and displays the User Interface.

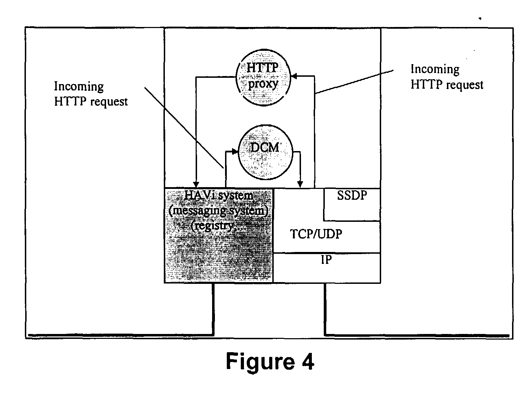

The bridge function is implemented in a device (called the bridge device or simply the bridge) which is connected to both sub-networks as shown in Figure 3(device C). Thus it has to contain, at least, the protocol stack as shown in the Figure 4 .Since the SSDP protocol requires some multicast capabilities, the IP layer will be IGMP ('Internet Group Management Protocol') compliant.

The modelization of a UPnP device or service seen from the HAVi sub-network will now be described.

The UPnP network is composed of devices that offer access to some network services. The SSDP protocol should permit the discovery of the services available in the network and indirectly the device that hosts the service. The HAVi network is composed of devices that contain one or more functional components (equivalent to services in UPnP). To represent a device, we have to use the DCM representation. To represent a functional component we have to use the FCM representation. In HAVi, the User interface protocol is managed through the DCM API.

Consequently :
- A UPnP device will be represented by a DCM in the bridge device.
- This DCM will contain the HTTP extra API.
- A UPnP service (except for the HTTP service) will be represented by a FCM in the bridge device.

It is mandatory to register these DCMs and FCMs through the HAVi REGISTRY service to allow any other HAVi object to discover them and, thus, to be able to operate them. The registration consists in registering the HAVi addresses of these software elements and the mandatory attributes according to the HAVi specification:
- Type of software element (either DCM or GENERIC FCM)
- HUID (unique hardware identifier: computed by the bridge device)
- Device class (LAV - meaning Legacy device)
- GUIReq (HTTP)
- DeviceManufacturer (manufacturer of the UPnP device/service)
- SoftwareElementVersion (computed by the bridge device)
- UserPreferredName (computed by the bridge device - based on the UPnP service/device name)

Before the bridge device is able to activate and register a DCM/FCM corresponding to a UPnP device/service, it has to detect its presence within the UPnP sub-network.

According to the SSDP (Simple Service Discovery Protocol) of UPnP, the bridge device acts as a SSDP client and server. Once the bridge device is connected to the home network, its SSDP client has to query the UPnP sub-network by sending the multicast OPTIONS message over UDP/IP to query the SSDP servers. The SSDP OPTIONS message will have the following format according to the HTTP specification:
OPTIONS _*_ HTTP/1 .1 Request-ID: uuid:1313Alt-Locations: <httpu://bridge.com/bar:1111>

This message contains the type of services concerned by the query (_*_ meaning : all), the version number of HTTP, a unique identifier to match the response with the query (the value shall respect a format described in the RFC 2518), and the URL the responder will use to give back its response(s) (the port number 1111 correspond to the SSDP client of the bridge).

All UPnP devices will send back one or several SDDP OPTIONS responses (one by service implemented within the device) containing the name of the service, the network location of the service (the URL used to reach the service), the protocol to be used to communicate with the service and a set of data to describe the device which hosts the service according to the following:
- Device manufacturer name
- Device name
- A URL to obtain an icon representing the device

The bridge device parses all responses and:
- For each new device detected, it installs and declares a HAVi DCM and registers it with its well specified attributes as described earlier.
- For each new service type, for which the bridge wants to offer the access to the HAVi network, it installs and declares a HAVi FCM and registers it with its well specified attributes as described earlier.

Consequently the DCM, respectively the FCM shall maintain a set of configuration data to be able to identify and join its associated UPnP device, respectively service.

For the DCM:
- The URL to join the HTTP server of the UPnP device (if this service is implemented in the device)
- The Device manufacturer name
- The Device name
- The URL to get an icon representing the device

For the FCM:
- The URL to join the UPnP service
- The type of the UPnP service (printer for example)
- The Device manufacturer name of the UPnP host device
- The service name of the UPnP service (PrinterRoom2 for example)
- The URL to get an icon representing the device

When a UPnP device is plugged into the network, it has to send the SSDP ANNOUNCE message containing the name of the network service it provides , the network location and protocol to be used to communicate with it. The SSDP server of the bridge is listening to the well known multicast port number. Thus for each incoming ANNOUNCE message, the bridge device will parse the message according to the manner described below.

For each detected UPnP device/service, the bridge device installs a DCM/FCM to control this UPnP device/service as explained in the previous sections. The HAVi sub-network has the knowledge of these new elements. Any application in the HAVi sub-network can then control a UPnP target. In our example (cf Figure 3) the A device provides the user with the list of devices in its home network represented by icons. To realize that, the user application of A (an HTML browser) has previously queried the HAVi registry to get all the identifiers of DCMs which were able to offer an HTTP API.

The user would like to control the E device using HTML and selects its associated icon. The user application in A establishes the HTTP connection with the associated DCM. The User application then sends the HTTP request to the DCM calling the function DCM::HttpRequest. The DCM then establishes the TCP connection according to HTTP between the bridge device (C) and the UPnP target (E) and forwards the HTTP request. To establish the connection, the DCM will use the URL associated with the HTTP server service of the UPnP target previously registered as configuration data.

Once the HTTP command (the HTTP_GET command for instance) is received by the UPnP target, it sends back the response (an HTML page) to the DCM which will forward this response to the source of the request.

The modelization of a HAVi target seen from the UPnP sub-network will now be described.

The UPnP model is based on the TCP/UDP/IP protocols. Consequently, a UPnP device is a network entity which can be reached through its IP (Internet Protocol) address. A service is an entity within the application layer (over TCP or UDP) which can be reached through a port number. The port number identifies the connection path between two UPnP entities (an application and a service for example). To represent a HAVi device or a HAVi functional component within the bridge we basically have two solutions:
- The first solution is based on port numbers and is used for the rest of the description, as explained below.
- The second solution is based on multiple IP addresses: local IP addresses are assigned to each device or functional component within the HAVi network. This assignment can be made to be consistent with the SSDP mechanism. The invoked HAVi component (either a DCM or an FCM) can, on instantiation, request a unique IP address assignment just as any other UPnP device entering the UPnP network.

The notion of a 'device' in UPnP is used only to reach the network entity and to obtain data describing the location where the service resides. Consequently there is no need to represent a HAVi device as a UPnP device. What is needed it to represent some HAVi services as the HAVi functional component APIs (FCM) and the HTTP API (offered by the DCM). According to the present embodiment, the so-called port number solution consists in representing a HAVi service by a proxy UPnP service (like a HTTP proxy server) where each proxy is associated with a port number (either TCP or UDP) attributed by the bridge.

UPnP requires that for any new services the SSDP client of the hosted device announce the service list it owns. The bridge uses the HAVi REGISTRY to be able to query or detect the new HAVi targets as FCM or DCM according to the appropriate criteria, which is, according to the present embodiment, the GUIREQ value.

Consequently, once the bridge detects a HAVi target (either a DCM or a FCM) for which a proxy UPnP service can be activated, it generates the SSDP multicast ANNOUNCE message to the UPnP subnetwork. The following ANNOUNCE message is used to announce a HTTP server service represented by a HTTP proxy within the bridge device:
ANNOUNCE server:HTTP HTTP/1.1 Location:httpu://bridge.com:123

The URL "server:HTTP" is the type of the service. The location field contains the URL to reach the service. It is composed of the address of the bridge device and a port number chosen by the bridge device and dedicated to the HTTP proxy associated with the HAVi target.

Each time a new proxy has to be activated, the bridge device chooses a new (private) port number related to the transport protocol used to reach that service (either UDP or TCP).

The entity body of the ANNOUNCE message will contain the following fields which help to identify the device hosting the service:
- Device manufacturer name
- Device name
- A URL to obtain an icon representing the device

It is possible also that the SSDP server of the bridge device receives an OPTIONS message from any UPnP device. The bridge will have to respond according to the description presented earlier.

Consequently the proxy service shall maintain a set of configuration data to be able to identify and join its associated HAVi target (either a DCM or a FCM). This configuration data shall comprise the Software Element Identifier (SEID) of the HAVi target.

Once a proxy is installed and declared to the UPnP sub-network, any application in the UPnP sub-network can then control these HAVi targets. In our example (cf Figure 3) the device D provides to the user the list of devices in its home network represented by icons. To realize that, the user application of device D (a HTML browser) has previously queried the UPnP sub-network through the SSDP OPTIONS method to get the description of all devices which implement a HTTP server service.

The user would like to control the device B using HTML and selects its associated icon. The user application in device D establishes the TCP connection with the HTTP proxy -associated with the HAVi target device B-embedded in the bridge device. The HTTP proxy then establishes a HTTP connection with the DCM representing the HAVi target calling the DCM::HttpOpen method as described earlier. The User application then sends the HTTP request to the HTTP proxy through the TCP connection. The HTTP proxy then forwards the HTTP request to the HAVi target device B (in fact its DCM) by calling the function DCM::HttpRequest. The DCM then sends back the HTTP response (its HTML home page for instance) by calling the HTTP proxy (method <client>::HttpResponse) acting as the HTTP client within the HAVi sub-network. The HTTP proxy then will forward the response to the user application located in device D.

Although the preferred embodiment concerns the interoperability of a UPnP sub-network and of a HAVi sub-network, the invention is not limited to these two network types and may also be applied to other types of networks.

## Claims

1. Method for bridging a HAVi sub-network and a UPnP sub-network comprising the steps of:
- discovering UPnP devices and/or services on the UPnP sub-network and corresponding to a selection criterion;
- declaration, by a sub-network bridging device, of each discovered UPnP device as a HAVi DCM and of each discovered UPnP service as a HAVi FCM on the HAVi sub-network.

2. Method according to claim 1, wherein the discovery step is carried out using Simple Service Discovery Protocol (SSDP) functions.

3. Method for bridging a HAVi sub-network and a UPnP sub-network comprising the steps of:
- discovering HAVi software elements of the HAVi sub-network corresponding to a selection criterion;
- representing, in a sub-network bridging device, each of said discovered elements by a UPnP proxy service identified by a port number attributed by said sub-network bridging device; and
- announcing each said proxy services on the UPnP sub-network.

4. Method according to claim 3, wherein the discovery step comprises the step of requesting, by said sub-network bridging device, a list of software elements from a HAVi registry.

5. Method according to one of the preceding claims, wherein the selection criterion is HTTP/HTML capability.

6. Device for bridging a UPnP sub-network and a HAVi sub-network implementing the methods according to one of the claims 1 to 5.
